# EUROPÄISCHE PATENTSCHRIFT

(11) **EP 1 188 978 B1**
(45) Veröffentlichungstag und Bekanntmachung des Hinweises auf die Patenterteilung: **05.10.2005**
(21) Anmeldenummer: 01810900.9
(22) Anmeldetag: 18.09.2001
(51) Int. Cl.: F16L 37/084, F16L 47/06, F16L 37/091

(54) **Steckmuffe zum Verbinden von Rohren aus Kunststoff**
Plug-in sleeve for connecting plastic pipes
Manchon emboîtable pour raccorder des tuyaux en plastique

(30) Priorität: 18.09.2000 CH 18042000
(43) Veröffentlichungstag der Anmeldung: 20.03.2002
(73) Patentinhaber: GEBERIT TECHNIK AG, 8645 Jona (CH)
(72) Erfinder: Schuster, Alexander, 8645 Jona (CH); Walker, Thomas, 8730 Uznach (CH)
(74) Vertreter: Groner, Manfred

(56) Entgegenhaltungen:
- EP-A- 0 160 559
- EP-A- 0 691 500
- DE-U- 9 212 014
- US-A- 4 123 090

## Beschreibung

Die Erfindung betrifft eine Steckmuffe nach dem Oberbegriff des Anspruchs 1.

Die US-A-4 123 090 offenbart eine Steckmuffe mit einem konischen Krallring, der eine Mehrzahl von elastischen Lappen aufweist, die schräg zur Längsachse der Steckmuffe geneigt sind und die jeweils am Grund breiter sind als am freien Ende. Beim Einschieben eines Rohres in die Steckmuffe werden die Lappen hauptsächlich an ihrem freien Ende gebogen.

Die EP-A-0 691 500 offenbart eine Verbindung mit einer Muffe und einem Haltering, der eine Mehrzahl nach innen gerichteter Haltekrallen aufweist. Die Haltekrallen sind auch hier an ihrem Grund wesentlich breiter als an ihrem freien Ende.

Die DE 92 19 014 U betrifft eine Steckverbindung mit einer Kreisringscheibe, die elastische Zungen aufweist, welche das Herausziehen eines Schlauches aus einer Muffe verhindern sollen. Auch in diesem Fall sind die Zungen an ihrem Grund jeweils wesentlich breiter als am freien Ende.

Die EP-A-0 160 559 offenbart eine Steckverbindung mit einer Kreisringscheibe, die im Radialschnitt winkelförmig ausgebildet ist. Die Kreisringscheibe besitzt zwei Positionen (P, Q), in denen ein Rohr festgehalten wird. Beim Verschieben des Rohres wird die Kreisringscheibe von der einen in die andere Position gekippt.

Eine Steckmuffe dieser Art ist im Stand der Technik aus der CH 590 423 A5 des Anmelders bekannt geworden. Diese weist einen Krallring mit schräg nach innen gebogenen Lappen auf. Beim Einführen eines Rohrendes werden die Lappen etwas nach aussen gebogen. Die vorderen Kanten der Lappen schneiden beim Zurückziehen des Rohrendes in die Oberfläche des Rohrendes ein und verhindern dadurch das Herausziehen des Rohrendes. Durch Einschieben eines ringförmigen Blechstreifens kann die Rohrkupplung wieder getrennt werden. Diese Steckmuffe hat sich in der Praxis an sich vielfach bewährt. Bei vergleichsweise grossen Rohrdurchmessern von beispielsweise 10 cm besteht hingegen die Schwierigkeit, dass das Rohrende mit hoher Kraft in die Steckmuffe eingeschoben werden muss. Da die Rohrenden üblicherweise von Hand eingeschoben werden, sind die erforderlichen Fügekräfte nachteilig und erschweren die Montage. Zudem besteht die Gefahr, dass das Rohr beim Einführen verkantet wird.

Der Erfindung liegt die Aufgabe zugrunde, eine Steckmuffe der genannten Art zu schaffen, die mit wesentlich geringeren Kräften fügbar ist und die dennoch die erforderliche Ausreisskraft besitzt.

Die Aufgabe ist bei einer gattungsgemässen Steckmuffe gemäss Anspruch 1 gelöst.

Bei der erfindungsgemässen Steckmuffe sind die Lappen schneidezahnförmig und wesentlich biegeelastischer ausgebildet als bisher. Durch die Ausrichtung in einer Ebene senkrecht zur Achsrichtung werden die Lappen beim Einschieben eines Rohrendes um einen wesentlich grösseren Winkel als bisher umgebogen und werden dadurch gespannt. Die schneidezahnförmige Ausbildung hat zur Folge, dass die Lappen hauptsächlich an ihrem Grund gebogen werden. Die Lappen können dadurch vergleichsweise flach an das Rohrende angelegt werden, was eine wirksame Verankerung beim Rückziehen des Rohres ergibt.

Unter schneidezahnförmig versteht man, dass die Lappen am Grund schmaler als am freien Ende sind.

Eine besonders günstige Formgebung der Lappen ergibt sich dann, wenn diese gemäss einer Weiterbildung der Erfindung jeweils einen Zahngrund mit einem Zahnhals aufweisen, der wesentlich schmaler ist als eine Zahnschneide. Die Lappen sind vorzugsweise so ausgebildet, dass sie sich kontinuierlich von der Zahnschneide zum Zahngrund verjüngen. Dies ergibt im montierten Zustand eine sehr vorteilhafte Biegekurve, welche eine wirksame Verankerung gewährleistet. Die Verankerung ist dann besonders wirksam, wenn die Lappen eine Zahnschneide aufweisen, die konkav ausgebildet ist, derart, dass sie im montierten Zustand mit der genannten Oberfläche des Rohres zwei im Abstand zueinander angeordnete Kontaktflächen bildet. Beim Zurückziehen des Rohrendes graben sich die beiden Kontaktflächen in das Rohr ein. Die beiden Kontaktflächen können bereichsweise schmal ausgebildet werden und damit ist gewährleistet, dass die Lappen auch bei vergleichsweise kleiner Spannung sich in die Oberfläche eingraben.

Der Krallring ist dann besonders wirksam, wenn er wesentlich mehr Lappen aufweist als bisher, vorzugsweise weist er mehr als dreissig insbesondere mehr als fünfzig vergleichsweise schmale Lappen auf. Beim Einschieben eines Rohrendes zentrieren diese zahlreichen Lappen das Rohrende wirksam und verhindern ein Verkanten.

Ein besonders einfacher Aufbau der Steckmuffe ergibt sich dann, wenn gemäss einer Weiterbildung der Erfindung der Krallring mit dem Dichtungsring in dieselbe Nut eingesetzt ist. Der Krallring ist dann vorzugsweise zwischen einer Nutenwand und dem Dichtungsring festgeklemmt.

Ist der Krallring gemäss einer Weiterbildung der Erfindung eben und flach ausgebildet, so kann er besonders kostengünstig als Stanzteil oder als Laser-/Wasserstrahlschneidteil hergestellt werden.

Ein Ausführungsbeispiel der Erfindung wird nachfolgend anhand der Zeichnung näher erläutert. Es zeigen:
- Fig. 1: ein Achsialschnitt durch einen Abschnitt der erfindungsgemässen Steckmuffe sowie ein Abschnitt eines eingesetzten Rohrendes,
- Fig. 2: eine Ansicht eines Lappens eines Krallringes,
- Fig. 3 und 4: schematisch das Umbiegen der Lappen beim Einschieben eines Rohrendes,
- Fig. 5: eine Ansicht eines Krallringes im unbelasteten Zustand,
- Fig. 6: ein stark vergrösserter Abschnitt des Krallringes gemäss Fig. 5 und
- Fig. 7: ein Achsialschnitt durch die erfindungsgemässe Muffe mit einem Abschnitt eines eingeführten Rohrendes.

Die Muffe 1 weist gemäss Fig. 7 einen im wesentlichen zylindrischen und hohlen Muffenkörper 3 mit zwei im Abstand zueinander angeordneten ringförmigen Nuten 4 und 16 auf, wobei in wenigstens eine dieser Nuten ein gummielastischer Dichtungsring 2 oder ein anderes geeignetes Dichtungsmittel eingesetzt ist. In die Nut 4 ist zudem ein Krallring 5 eingesetzt, der wie ersichtlich vom Dichtungsring 2 gegen eine Nutenwand festgeklemmt ist. Die andere Nut 16 kann ebenfalls einen Dichtungsring und einen Krallring aufweisen, dies ist aber nicht zwingend.

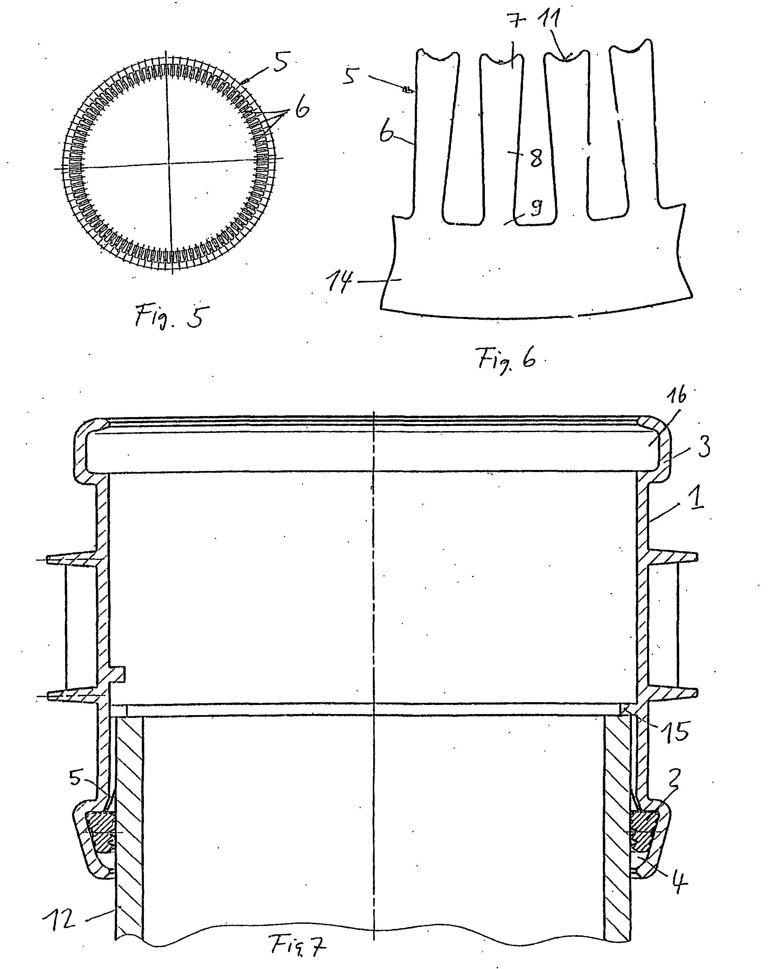

Der Krallring 5 besteht aus federelastischem Material, insbesondere federelastischem Stahl und ist vorzugsweise ein ebenes Stanzteil. Er weist gemäss den Fig. 5 und 6 eine Mehrzahl von Lappen auf, die radial nach innen gerichtet sind und die schneidezahnförmig ausgebildet sind. Die Anzahl dieser Lappen 6 ist vergleichsweise gross und die Abstände zwischen den Lappen 6 entsprechen etwa der Breite dieser Lappen 6. Die Lappen 6 sind somit vergleichsweise dicht angeordnet und vorzugsweise sind mehr als dreissig und insbesondere mehr als fünfzig Lappen 6 vorgesehen.

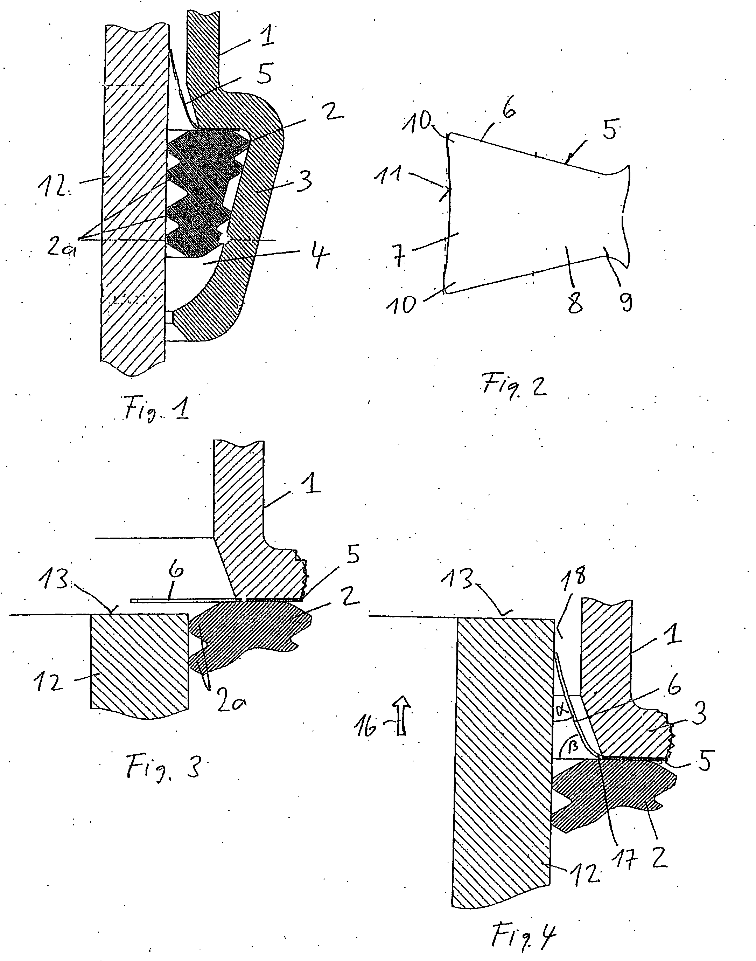

Die Lappen 6 weisen jeweils am freien vorderen Ende eine Zahnschneide 7 und einen Zahnhals 8 auf, der sich kontinuierlich gegen einen Zahngrund 9 verjüngt, wie insbesondere die Fig. 2 deutlich zeigt. Die Zahnschneide 7 bildet eine konkave Frontkante 11, derart, dass Ecken 10 frontseitig besonders exponiert sind.

Im unbelasteten Zustand und somit vor dem Kuppeln sind die Lappen 6 gemäss Fig. 3 radial nach innen ausgerichtet und liegen in einer quer zur Einschubrichtung verlaufenden Ebene. Vorzugsweise liegen sämtliche Lappen 6 in dieser Ebene, dies ist aber nicht zwingend. Die Einschubrichtung ist in Fig. 4 mit dem Pfeil 16 angedeutet.

Wird ein Rohrende 12 montiert, so wird dieses gemäss Fig. 4 in Richtung des Pfeiles 16 in die Muffe 1 eingeschoben. Das Rohrende 12 gelangt gemäss Fig. 3 zuerst mit dem Dichtungsring 2 in Eingriff. Der Dichtungsring 2 weist gemäss Fig. 1 mehrere nach innen gerichtete Rippen 2a auf, an denen das Rohrende 12 zentriert wird. Wird das Rohrende 12 ausgehend von der Stellung gemäss Fig. 3 weiter nach innen geschoben, so gelangt die Frontseite 13 des Rohrendes in Eingriff mit den Lappen 6 und biegt diese schliesslich in die in Fig. 4 gezeigte Position um. Die Lappen 6 werden wie ersichtlich vor allem am Zahngrund 9 gebogen. Im montierten Zustand weisen die Lappen 6 somit jeweils eine Biegekante 17 auf, die sich nahe am Körper 3 der Muffe 1 befindet. Die Lappen 6 liegen mit einem Winkel α vergleichsweise flach an der Aussenseite 18 des Rohrendes 12 an. Dieser Winkel 18 liegt vorzugsweise im Bereich von 15° bis 25°. Die Lappen 6 sind wie ersichtlich vergleichsweise schmal und weichelastisch ausgebildet. Sie können somit mit vergleichsweise kleiner Kraft umgebogen werden. Aufgrund der schmalen und weichelastischen Ausbildung ist der Widerstand der Lappen 6 beim Einführen des Rohrendes 12 auch bei sehr zahlreichen Lappen 6 vergleichsweise klein. Da die Lappen 6 um einen vergleichsweise grossen Winkel β umgebogen werden, ist die Anpresskraft an die Oberfläche 18 dennoch vergleichsweise hoch.

Wird das Rohrende 12 in Gegenrichtung des Pfeils 16 aus der Muffe 1 gezogen, so graben sich die Lappen 6 jeweils mit ihrer Zahnschneide 7 in die Oberfläche 18. Hierbei setzen die Zahnschneiden 7 jeweils mit ihren Ecken 10 an und diese graben sich somit zuerst in die Oberfläche 18. Die Lappen 6 besitzen somit zwei vergleichsweise kurze und im Abstand zueinander angeordnete Kontaktflächen.

## Patentansprüche

1. Steckmuffe zum Verbinden von Rohren aus Kunststoff, die an ihrer Innenseite mindestens eine Ringnut (4) aufweist, in welcher ein Dichtungsmittel (2) aus gummielastischem Material angeordnet ist und mit einem ebenfalls an dieser Innenseite angeordneten Krallring (5), um das in die Muffe (1) einführbare Rohrende (12) am Austreten zu hindern, wobei der Krallring (5) eine Mehrzahl nach einwärts gerichtete, biegeelastisch verformbare Lappen (6) aufweist, die im Wesentlichen in einer senkrecht zur Achsrichtung verlaufenden Ebene angeordnet sind, die geeignet sind, beim Herausziehen des Rohrendes (12) aus der Muffe (1) in die Oberfläche (18) des Rohrendes (12) einzukrallen, **dadurch gekennzeichnet, dass** die Lappen (6) schneidezahnförmig ausgebildet sind, wobei die Lappen (6) aufgrund ihrer schneidezahnförmigen Ausbildung beim Einführen des Rohrendes (12) hauptsächlich an ihrem Grund gebogen werden können.

2. Steckmuffe nach Anspruch 1, **dadurch gekennzeichnet, dass** die Lappen (6) jeweils einen Zahngrund (9) mit einem Zahnhals (8) aufweisen, der wesentlich schmaler ist als eine Zahnschneide (7).

3. Steckmuffe nach Anspruch 1 oder 2, **dadurch gekennzeichnet, dass** die Lappen (6) jeweils eine Zahnschneide (7) aufweisen, die konkav ausgebildet ist, derart, dass sie im montierten Zustand mit der genannten Oberfläche (18) des Rohrendes (12) zwei im Abstand zueinander angeordnete Kontaktflächen (10) bildet.

4. Steckmuffe nach einem der Ansprüche 1 bis 3, **dadurch gekennzeichnet, dass** die Lappen (6) im montierten Zustand vorwiegend jeweils an ihrer Ansatzstelle (17) gebogen sind.

5. Steckmuffe nach einem der Ansprüche 1 bis 4, **dadurch gekennzeichnet, dass** die Lappen (6) jeweils einen V-förmigen Zahnhals (8) aufweisen, der im montierten Zustand eine Biegekante (17) bildet.

6. Steckmuffe nach einem der Ansprüche 1 bis 5, **dadurch gekennzeichnet, dass** die Länge der Lappen (6) so gewählt ist, dass sie im montierten Zustand mit einem Winkel (α) im Bereich von 15° bis 25° an der genannten Oberfläche (18) des Rohrendes (12) anliegen.

7. Steckmuffe nach einem der Ansprüche 1 bis 6, **dadurch gekennzeichnet, dass** beim unbelasteten Krallring (5) die Lappen (6) mit einem ringförmigen äusseren Körper (14) in einer Ebene angeordnet sind.

8. Steckmuffe nach einem der Ansprüche 1 bis 7, **dadurch gekennzeichnet, dass** beim Einschieben eines Rohrendes (12) die Lappen (6) um einen Winkel (β) grösser als 45° umgebogen werden.

9. Steckmuffe nach einem der Ansprüche 1 bis 8, **dadurch gekennzeichnet, dass** der Krallring (5) ein Stanz-, Laser- oder Wasserstrahlschneidteil ist.

10. Steckmuffe nach einem der Ansprüche 1 bis 9, **dadurch gekennzeichnet, dass** der Krallring (5) mit einem Dichtungsring (2) in dieselbe Nut eingesetzt ist.

11. Steckmuffe nach Anspruch 10, **dadurch gekennzeichnet, dass** der Krallring (5) zwischen dem Dichtungsring (2) und einer Nutenwand (4) angeordnet ist.

12. Krallring für eine Steckmuffe nach einem der Ansprüche 1 bis 11, **dadurch gekennzeichnet, dass** er ein ebenes Stanzteil ist.

13. Krallring nach Anspruch 12, **dadurch gekennzeichnet, dass** die Lappen (6) nicht wesentlich breiter sind als die Abstände zwischen zwei benachbarten Lappen(6).

14. Krallring gemäss Anspruch 12 oder 13, **dadurch gekennzeichnet, dass** er mehr als 30 vorzugsweise mehr als 50 Lappen (6) aufweist.

## Claims

1. Push-fit sleeve for connecting plastic pipes, which has at least one annular groove (4) in its internal face in which a sealing means (2) made from a resilient rubber-type material is disposed and a claw ring (5) likewise disposed on this internal face in order to prevent the pipe end (12), which can be inserted in the sleeve (1), from coming out, which claw ring (5) has a plurality of outwardly directed elastically resilient, deformable tangs (6) essentially disposed in a plane extending perpendicular to the axial direction which are suitable for clawing into the surface (18) of the pipe end (12) as the pipe end (12) is being pulled out of the sleeve (1), **characterised in that** the tangs (6) are designed with the shape of a cutting tooth, and, being designed with the shape of a cutting tooth, the tangs (6) are able to bend mainly at their base when the pipe end (12) is being inserted.

2. Push-fit sleeve as claimed in claim 1, **characterised in that** the tangs (6) each have a tooth base (9) with a tooth neck (8) that is significantly narrower than a tooth cutting edge (7).

3. Push-fit sleeve as claimed in claim 1 or 2, **characterised in that** the tangs (6) each have a tooth cutting edge (7) of a concave design so that it forms two mutually spaced contact surfaces (10) with said surface (18) of the pipe end (12) in the fitted state.

4. Push-fit sleeve as claimed in one of claims 1 to 3, **characterised in that** the tangs (6) are predominantly bent at their shoulder point (17) in the fitted state.

5. Push-fit sleeve as claimed in one of claims 1 to 4, **characterised in that** the tangs (6) each have a V-shaped tooth neck (8) which forms a bending edge (17) in the fitted state.

6. Push-fit sleeve as claimed in one of claims 1 to 5, **characterised in that** the length of the tangs (6) is selected so that they sit on said surface (18) of the pipe end (12) at an angle (α) in the range of from 15° to 25° in the fitted state.

7. Push-fit sleeve as claimed in one of claims 1 to 6, **characterised in that** the tangs (6) are disposed in a same plane as an annular outer body (14) when the claw ring (5) is in the non-clamping state.

8. Push-fit sleeve as claimed in one of claims 1 to 7, **characterised in that** the tangs (6) are bent by an angle (β) that is bigger than 45° when a pipe end (12) is inserted.

9. Push-fit sleeve as claimed in one of claims 1 to 8, **characterised in that** the claw ring (5) is a part made by punch cutting, laser cutting or water jet cutting.

10. Push-fit sleeve as claimed in one of claims 1 to 9, **characterised in that** the claw ring (5) is inserted in the same groove as a sealing ring (2).

11. Push-fit sleeve as claimed in claim 10, **characterised in that** the claw ring (5) is disposed between the sealing ring (2) and a groove wall (4).

12. Claw ring for a push-fit sleeve as claimed in one of claims 1 to 11, **characterised in that** it is a flat punched part.

13. Claw ring as claimed in claim 12, **characterised in that** the tangs (6) are essentially no wider than the spaces between two adjacent tangs (6).

14. Claw ring as claimed in claim 12 or 13, **characterised in that** it has more than 30, preferably more than 50, tangs (6).

## Revendications

1. Manchon emboîtable pour raccorder des tuyaux en matière plastique, qui présente sur sa face interne au moins une rainure annulaire (4) dans laquelle un moyen d'étanchéité (2) en matériau élastique est disposé et comportant également une bague à griffes (5) disposée sur cette face interne pour empêcher l'extrémité de tuyau (12) introduite dans le manchon (1) de sortir, la bague à griffes (5) présentant une pluralité de languettes (6) déformables élastiquement en flexion, dirigées vers l'intérieur, qui sont disposées pour l'essentiel dans un plan s'étendant perpendiculairement à la direction axiale, capables, lors du retrait de l'extrémité de tuyau (12) hors du manchon (1), de s'enfoncer dans la surface (18) de l'extrémité de tuyau (12), **caractérisé en ce que** les languettes (6) sont conçues en forme de dents coupantes et ces languettes (6), en raison de leur conception en forme de burins, peuvent être courbées principalement à leur base lors de l'introduction de l'extrémité de tuyau (12).

2. Manchon emboîtable selon la revendication 1, **caractérisé en ce que** les languettes (6) présentent respectivement une base de dent (9) avec un col de dent (8) qui est nettement plus étroit qu'une arête de dent (7).

3. Manchon emboîtable selon la revendication 1 ou 2, **caractérisé en ce que** les languettes (6) présentent respectivement une arête de dent (7) qui est de forme concave de façon que, à l'état monté, elle forme avec la surface (18) citée de l'extrémité de tuyau (12) deux surfaces de contact (10) disposées à distance l'une de l'autre.

4. Manchon emboîtable selon l'une quelconque des revendications 1 à 3, **caractérisé en ce que** les languettes (6), à l'état monté, sont courbées surtout respectivement à leur point de base (17).

5. Manchon emboîtable selon l'une quelconque des revendications 1 à 4, **caractérisé en ce que** les languettes (6) présentent respectivement un col de dent (8) en forme de V qui, à l'état monté, forme un bord de flexion (17).

6. Manchon emboîtable selon l'une quelconque des revendications 1 à 5, **caractérisé en ce que** la longueur des languettes (6) est choisie de façon que, à l'état monté, elles s'appuient avec un angle (α) dans la gamme de 15° à 25° sur la surface citée (18) de l'extrémité de tuyau (12).

7. Manchon emboîtable selon l'une quelconque des revendications 1 à 6, **caractérisé en ce que**, lorsque la bague à griffes (5) n'est pas sollicitée, les languettes (6) sont disposées dans un plan avec un corps (14) extérieur de forme annulaire.

8. Manchon emboîtable selon l'une quelconque des revendications 1 à 7, **caractérisé en ce que**, lors de l'introduction d'une extrémité de tuyau (12), les languettes (6) sont courbées autour d'un angle (β) supérieur à 45°.

9. Manchon emboîtable selon l'une quelconque des revendications 1 à 8, **caractérisé en ce que** la bague à griffes (5) est une pièce découpée par estampage, par laser ou par jet d'eau.

10. Manchon emboîtable selon l'une quelconque des revendications 1 à 9, **caractérisé en ce que** la bague à griffes (5) est introduite avec une bague d'étanchéité (2) dans la même rainure.

11. Manchon emboîtable selon la revendication 10, **caractérisé en ce que** la bague à griffes (5) est disposée entre la bague d'étanchéité (2) et une paroi de rainure (4).

12. Bague à griffes pour un manchon emboîtable selon l'une des revendications 1 à 11, **caractérisée en ce qu'**elle est une pièce estampée plane.

13. Bague à griffes selon la revendication 12, **caractérisée en ce que** les languettes (6) ne sont pas nettement plus larges que les distances entre deux languettes (6) adjacentes.

14. Bague à griffes selon la revendication 12 ou 13, **caractérisée en ce qu'**elle présente plus de 30, de préférence plus de 50 languettes (6).
